# NOUVEAU FASCICULE DE BREVET EUROPEEN

(11) **EP 0 934 915 B2**
(45) Date de publication et mention de la décision concernant l'opposition: **27.11.2013**
(45) Mention de la délivrance du brevet: 17.05.2006
(21) Numéro de dépôt: 99400235.0
(22) Date de dépôt: 03.02.1999
(51) Int. Cl.: C04B 28/04, C04B 40/00

(54) **Béton très haute performance, autonivelant, son procédé de preparation et son utilisation**
Selbstnivellierender sehr hoher Leistungsbeton, Verfahren zu seiner Herstellung und seine Verwendung
Self-leveling, very high performance concrete, process for its preparation and its utilisation

(30) Priorité: 06.02.1998 FR 9801416
(43) Date de publication de la demande: 11.08.1999
(73) Titulaire: EIFFAGE TP, 93336 Neuilly sur Marne (FR)
(72) Inventeur: Cadoret, Gael, 75007 Paris (FR); Gilliers, Roland, 93337 Neuilly sur Marne Cedex (FR); Thibaux, Thierry, 93337 Neuilly sur Marne Cedex (FR)
(74) Mandataire: Cabinet Plasseraud

(56) Documents cités:
- WO-A-90/13524
- WO-A-95/01316
- US-A- 4 948 429
- CHEMICAL ABSTRACTS, vol. 97, no. 24, 13 décembre 1982 Columbus, Ohio, US; abstract no. 202478a, H. BACHE: page 281; XP000183952 & BR 8 108 596 A (ID.)
- CHEMICAL ABSTRACTS, vol. 102, no. 20, 20 mai 1985 Columbus, Ohio, US; abstract no. 171661v, DENKI KAGAKU KOGYO K K: page 315; XP000061373 & JP 59 217658 A (ID.)
- DATABASE WPI Week 9531 Derwent Publications Ltd., London, GB; AN 95-237064 XP002081741 & JP 07 144953 A (ONODA CEMENT)
- CHEMICAL ABSTRACTS, vol. 119, no. 2, 12 juillet 1993 Columbus, Ohio, US; abstract no. 14195e, A. NAKANE, ET AL: page 370; XP000430692 & JP 05 058687 A (ID.)
- CHEMICAL ABSTRACTS, vol. 114, no. 26, 1 juillet 1991 Columbus, Ohio, US; abstract no. 252812v, K. KO: page 350; XP000194880 & JP 02 267146 A (ID.)

## Description

La présente invention a pour objet un béton très haute performance, autonivelant. Dans la présente invention on entend par "béton très haute performance" un béton présentant, une résistance caractéristique à la compression à 28 jours supérieure à 150MPa, un module d'élasticité à 28 jours supérieur à 60GPa et une résistance au jeune âge supérieure à 100MPa à 40 heures, les valeurs ci-dessus étant données pour un béton conservé et maintenu à 20°C. Elle a également pour objet le procédé de préparation ainsi que les utilisations de ce béton.

Dans la présente invention on entend par "béton" un corps de matrice cimentaire pouvant selon les ouvrages à réaliser inclure des fibres, et obtenu par durcissement d'une composition cimentaire mélangée avec de l'eau.

Des bétons haute performance sont déjà connus, cependant leur utilisation sans armature passive est limitée.

Des compositions spécifiques pour fabriquer un béton de fibres métalliques ductile à ultra-haute résistance permettant la construction d'éléments précontraints ou non, ne comportant aucune armature sont décrites dans le brevet FR 2 708 263. Cependant, ce béton nécessite l'inclusion de quartz broyé et/ou une cure thermique pour atteindre les performances requises.

Les inventeurs ont eu le mérite de trouver un béton autonivelant, dans lequel on peut rajouter des fibres, qui présente une excellente résistance à la compression, un excellent module d'élasticité, une excellente résistance au jeune âge, sans nécessiter aucune addition et aucune cure thermique, ce qui présente un avantage économique et une grande facilité de mise en oeuvre.

Un tel béton présente une résistance caractéristique à la compression à 28 jours d'au moins 150MPa, un module d'élasticité à 28 jours d'au moins 60GPa, une résistance à la compression à 40 heures d'au moins 100MPa, ces valeurs étant données pour un béton conservé et maintenu à 20°C, constitué:
- d'un ciment présentant une granulométrie correspondant à une moyenne harmonique des diamètres comprise entre 3 et 7 µm;
- d'un mélange de sables de bauxites calcinées de différentes granulométries tel que défini ci-dessous;
- de la fumée de silice dont 40% des particules ont une dimension inférieure à 1 µm, la moyenne harmonique des diamètres étant voisine de 0,2 µm
- d'un agent anti-mousse;
- d'un superplastifiant réducteur d'eau choisi parmi les polyacrylates et les éthers polycarboxyliques;
- éventuellement des fibres;
- et d'eau,
répartition granulométrique telle que l'on ait au moins trois et au plus cinq classes granulométriques moyenne harmonique des diamètres

Ce béton présente en outre une très grande résistance à l'abrasion. Par ailleurs, lorsqu'il est exempt de fibre, il présente une résistance à la traction directe supérieure à 10 MPa.

Le ciment mis en oeuvre présente une teneur élevée en silicates bi- et tricalciques C2S et C3S, (ciment HTS) de préférence supérieure à 75%. Il peut étre choisi parmi les ciments de type Portland CEM I, ayant de préférencedes caractéristiques complémentaires telles que "Prise Mer - PM" ou encore mieux "Prise Mer et Résistant aux Sulfates - PM-ES" ou leurs mélanges. Pour des raisons de fluidification, on préfère utiliser un ciment présentant également une faible teneur en C3A, de préférence inférieure à 5%,

Dans la présente invention, par le terme "mélange de sables de bauxites calcinées" on entend non seulement un mélange de sables de bauxites calcinées de différentes granulométries mais également un mélange comprenant du sable de bauxite calcinée avec un autre type de sable ou bien avec des granulats présentant de très grandes résistance et dureté tels que, notamment des granulats de corindon, d'émeri ou des résidus de métallurgie tels que du carbure de silicium.

Dans la présente invention on utilise un mélange de sables de bauxite calcinée de différentes granulométries constitué par :
- un sable de granulométrie moyenne inférieure à 1 mm comprenant 20% de granulats de dimension inférieure à 80 microns,
- un sable de granulométrie comprise entre 3 et 7 mm,
- et éventuellement un sable de granulométrie comprise entre 1 et 3 mm.

Le sable de plus petite granulométrie peut être remplacé en totalité ou partiellement par :
- du ciment, des additions minérales telles que du laitier broyé, des cendres volantes ou encore du filler de bauxite calcinée dont la moyenne harmonique des diamètres est voisine de celle du ciment, pour ce qui est de la fraction de 20% de granulats de dimension inférieure à 80 µm,
- et du sable de granulométrie supérieure à 1mm, par exemple 3 à 7 mm), pour ce qui est de l'autre fraction.

La fumée de silice mise en oeuvre dans le béton selon l'invention peut être densifiée ou non densifiée, c'est à dire qu'elle présente une densité comprise entre 200 et 600kg/m³. Cette fumée de silice doit comporter une fois dispersée dans le béton au moins 40% de particules de dimension inférieure à un micron, la dimension des particules restantes étant inférieure à 20µm.

La bauxite utilisée peut être calcinée indifféremment dans des fours rotatifs ou dans des fours verticaux. Elle est ensuite concassée et broyée pour obtenir la granulométrie souhaitée. La granulométrie maximum est déterminée par la résistance propre des granulats en relation avec les performances en compression attendues sur le béton.

De façon à éviter l'inclusion de bulles d'air qui diminueraient la résistance du béton, on utilise un agent anti-mousse utilisé classiquement pour les forages pétroliers c'est-à-dire dans des applications nécessitant un réglage très précis de la densité du matériau coulé. Ces agents anti-mousse sont appelés "defoamer and deaerator admixtures". Ces agents se présentent sous forme sèche ou sous forme liquide. A titre d'exemple de tels agents, on peut citer notamment les mélanges d'alcool dodécylique et polypropylène glycol, les dibutylphtalates, les dibutylphosphates, les polymères de silicone tels que le polydiméthylsiloxane, et les silicates modifiés.

Selon un mode de réalisation particulier de l'invention, on utilise comme agent anti-mousse un silicate traité avec un glycol polymérisé commercialisé par la Société TROY CHEMICAL CORPORATION sous la marque TROYKYD^{®} D126.

Comme superplastifiant réducteur d'eau, on ne peut pas utiliser tous les produits actuellement sur le marché, cependant on peut utiliser un superplastifiant réducteur d'eau de type éther polycarboxylique modifié, en particulier le GLENIUM^{®} 51 commercialisé par la Société MBT France. Ce produit peut être sous forme liquide ou sous forme de poudre. A titre complémentaire, pour réduire la teneur globale en alcalins (si la nature des granulats ou encore la quantité de fumée de silice est supérieure à 10% de la masse du ciment) la neutralisation des fluidifiants pourra être choisie à base calcique plutôt que sodique.

Pour augmenter les caractéristiques du béton selon l'invention, dans certains ouvrages, des fibres sont incorporées dans le béton. Ces fibres sont choisies notamment parmi les fibres de carbone, de Kevlar^{®}, de polypropylène ou les fibres métalliques et leurs mélanges. On préfère utiliser des fibres en acier.

Ces fibres peuvent avoir des formes quelconques, cependant afin d'obtenir une bonne maniabilité du béton on préfère utiliser des fibres droites. Ces fibres ont un diamètre compris entre 0,1 et 1,0 mm, de préférence entre 0,2 et 0,5 mm, et plus préférentiellement encore entre 0,2 et 0,3 mm, et une longueur comprise entre 5 et 30 mm, de préférence entre 10 et 25 mm, et plus préférentiellement encore entre 10 et 20 mm.

Lorsque l'on introduit des fibres, la matrice granulaire est modifiée. En effet, les fibres doivent être enrobées, il est donc nécessaire que la quantité des fines, c'est-à-dire des particules de dimension inférieure à 0,1 mm, augmente. La quantité de fumées de silice, de ciment, de sable de plus petite granulométrie et/ou d'additions minérales est donc supérieure à celle d'un béton sans fibre.

Le béton comprend, en parties en poids:
- 100 de ciment;
- de 50 à 200, de préférence de 60 à 180 et plus préférentiellement encore de 80 à 160 de mélange de sables de bauxites calcinées;
- de 6 à 25, de préférence de 6 à 20, de fumée de silice;
- de 0,1 à 10, de préférence de 0,2 à 5 d'agent anti-mousse;
- de 0,1 à 10, de préférence de 0,5 à 5 de superplastifiant réducteur d'eau;
- de 0 à 50, de préférence de 2 à 20, et plus préférentiellement encore de 4 à 16 de fibres:
- et de 10 à 30, de préférence de 10 à 20 d'eau.

Par ailleurs, on peut ajouter dans la composition de béton selon l'invention de 0,5 à 3 parties, de préférence de 0,5 à 2 parties, et plus préférentiellement encore 1 partie d'oxyde à calcium ou de sulfate de calcium. L'oxyde de calcium ou le sulfate de calcium est ajouté sous forme pulvérulente ou micronisée et doit permettre de compenser le retrait endogène inhérent aux formulations à base de liants hydrauliques associées à de très faibles quantités d'eau.

Il est également possible d'utiliser des fillers de bauxite calcinée (dont le diamètre harmonique moyen est inférieure à 80µm) en substitution partielle du ciment et de la fumée de silice, ce qui permet par exemple d'ajuster le module d'élasticité qui peut ainsi varier de 60GPa à 75MPa. Ce même ajustement correspond également à des modifications de caractéristiques de déformations différées (retrait fluage).

Les quantités des différents constituants du béton sont ajustables par l'homme du métier en fonction de l'utilisation et des propriétés souhaitées du béton.

Un dosage faible de fumée de silice, de 6 à 8 parties, permet d'obtenir des résistances plus élevées à court terme, alors que des dosages entre 15 et 20 parties permettent de valoriser tous les gains de performance à moyen terme et à long terme tels que la rentabilité du mélange lorsque le béton est conservé et maintenu à 20°C. L'addition de plus de 25 parties de fumée de silice ne présente aucun avantage car elle ne permet pas l'augmentation des performances du matériau résultant et en augmente le coût.

L'invention a également pour objet un procédé de préparation du béton.

Selon l'invention, dans un malaxeur, on introduit tous les constituants du béton selon l'invention, on malaxe et On obtient un béton prêt à mouler ou à couler qui présente une très bonne maniabilité.

Selon un autre mode de réalisation, on mélange tout d'abord toutes les matières granulaires sèches, c'est-à-dire le ciment, les sables, la fumée de silice, et éventuellement le superplastifiant et l'agent anti-mousse puis, dans un malaxeur on introduit ce prémélange auquel on ajoute l'eau, le superplastifiant et l'agent anti-mousse, si ceux-ci sont sous forme liquide, et les fibres si besoin est.

De façon préférée, en prépare tout d'abord le mélange des poudres puis au moment de l'utilisation, on malaxe les poudres avec les quantités souhaitées de fibres et d'eau et éventuellement de superplastifiant réducteur d'eau et d'agent anti-mousse dans la mesure où ceux-ci sont sous forme liquide. Ainsi, de façon avantageuse, on prépare des sacs ou autre types d'emballage (par exemple "big bag") de produit prémélangé à sec prêt à l'emploi qui se conservent et se stockent facilement étant donné qu'ils ont une très faible teneur en eau. Au moment de l'utilisation il suffit donc de verser dans un malaxeur ce produit prémélangé prêt à l'emploi avec les quantités souhaitées de fibres et d'eau et éventuellement de superplastifiant réducteur d'eau. Après malaxage, par exemple pendant 4 à 16 minutes, le béton selon l'invention obtenu peut être moulé sans difficulté, étant donné ses très hautes performances d'étalement.

Pour réaliser le moulage, on peut utiliser des moules classiques, en bois, métal, etc., ou des moules calorifugés qui ont pour seul but de permettre une diminution du temps de prise et une montée plus rapide en résistance. Le béton selon l'invention n'a nullement besoin de subir un traitement thermique pour attendre les performances requises. Bien entendu, un traitement thermique pourrait être envisagé pour améliorer encore les performances mais ceci entraînerait un surcoût. Par contre, une simple isolation du coffrage permet de développer les réactions pouzzolaniques des fumées de silice et procure ainsi des gains importants sur les résistances au jeune âge. Par exemple, on a mesuré 160 MPa à 40 heures sur une âme de béton de 11 cm d'épaisseur et dont la température n'a pas dépassé 60°C.

La présente invention perte également sur les produits prémélangés à sec prêts à l'emploi.

Le béton selon l'invention peut être utilisé dans tous les domaines d'application des bétons armés ou non. Plus particulièrement, compte tenu du fait que ce béton est autonivelant, il peut être coulé en place pour la réalisation de poteaux, poutrelles, poutres, planchers, etc.; il peut également être utilisé dans toutes les applications de préfabrication. Compte tenu de ses caractéristiques de cohésion et de viscosité, il peut être utilisé pour des coffrages comprenant des inserts. Il peut également être utilisé pour réaliser des clavages entre les éléments de structure. Il peut en outre être utilisé pour la réalisation de dallages, d'ouvrages d'art, de pièces précontraintes ou de matériaux composites. Compte tenu de ses très hautes résistances, il peut être utilisé dans le domaine nucléaire, par exemple pour la réalisation de containers de déchets radioactifs, de pièces nécessaires à la rénovation des réfrigérants des centrales nucléaires. Par ailleurs, ses résistances à la compression et son module d'élasticité élevés permettent une diminution du dimensionnement d'ouvrages le mettant en oeuvre, ainsi, il serait particulièrement utile par exemple pour tous les éléments, fûts, tubes, containers, utilisés pour l'assainissement. Il présente également un très faible coefficient de frottement qui n'est pas modifié au cours du temps ce qui le rend tout à fait approprié au transport de matières classiquement corrosives pour le béton. En outre, compte tenu du fait que sa teneur en fumée de silice peut être réduite par rapport aux bétons haute performance classiques, son pH est très élevé, ce qui en fait un matériau de prédilection pour la protection des tuyaux métalliques contre la corrosion.

La présente invention va être expliquée plus en détail à l'aide des exemples suivants qui ne sont pas limitatifs.

### EXEMPLES

### Exemple 1

On prépare 5 formulations de béton selon l'invention en faisant varier les quantités respectives des divers constituants. La composition de chacune de ces formulations (béton A à béton E) est reprise dans le Tableau 1 ci-dessous.

Le ciment utilisé est un ciment HTS Le Teil commercialisé par Lafarge.

Pour les bétons B et D on a utilisé des fumées de silice commercialisées par la Société ELKEM sous les références 983U ou 940U refractory grade..Pour les bétons A et C on a utilisé des fumées de silice commercialisées par la Société PECHINEY et provenant des usines de Laudun et pour le béton E on a utilisé de la silice thermique de SAINT GOBAIN SEPR

Les fibres utilisées sont des fibres droites de 0,3 mm de diamètre et de 20 mm de longueur.

On a utilisé un superplastifiant réducteur d'eau commercialisé par la Société MBT France sous la marque GLENIUM^{®} 51.

Comme agent anti-mousse on a utilisé l'agent anti-mousse commercialisé par la Société TROY sous la marque TROYKYD^{®} D126.

Pour chacune des formulations on a réalisé un essai normalisé de l'étalement sur table à secousses, les résultats obtenus sont repris dans le Tableau 2 ci-dessous.

Avec chacune des formulations on a préparé des éprouvettes de 11x22cm sur lesquelles on a réalisé des essais normalisés de mesure de la résistance à la compression à 7, 14 jours, et à 28 jours selon la norme NFP 18406 et de mesure du module d'élasticité à 28 jours. Les résultats obtenus sont également repris dans le Tableau 2.

### Exemple 2 : Modification de la teneur en fibres

On a préparé de nouvelles formulations de béton en reprenant la formulation de béton B de l'exemple 1 dans laquelle on a fait varier notamment la quantité de fibres introduites. On a ainsi préparé quatre bétons différents ayant respectivement une teneur en fibres de 0, 1, 1,5, 2 et 3% en volume. Pour réaliser ces bétons, on a utilisé du ciment HTS Le Teil commercialisé par la Société LAFARGE, des fumées de silice 983U refrac.grade, commercialisées par ELKEM, des fibres droites de 0,3mm de diamètre et de 20 mm de longueur, le superplastifiant réducteur d'eau GLENIUM^{®} 51 de la Société MET France et l'anti-mousse TROYKYD^{®} D126 de la Société TROY.

La composition de ces formulations est donnée dans le Tableau 3 ci-dessous (béton 0%, 1%, 1,5%, 2% et 3%).

Sur chacune des formulations on a mesuré l'étalement comme dans l'exemple 1, les résultats obtenus sont donnés dans le tableau 3 ci-dessous.

Avec chacune de ces formulations on a préparé des éprouvettes de 11x22cm sur lesquelles on a mesuré la résistance à la compression à 28 jours et le module d'élasticité à 28 jours, comme dans l'exemple 1.

Les résultats obtenus sont repris dans le tableau 3 ci-après.

**TABLEAU 1**

| **MATIERES PREMIERES** | **BETON A** | **BETON B** | **BETON C** | **BETON D** | **BETON E** |
|---|---|---|---|---|---|
| Ciment HTS Le Teil | 884 | 934 | 939 | 936 | 1074 |
| Fumées de silice | | 81 | | 142 | 163 |
| | 62 | | 168 | | |
| Sable 0/1* | 688 | 685 | 554 | 597 | 765 |
| Sable 1/3^{†} | 236 | 203 | ---- | 0 | |
| Sable 3/6^{‡} | 550 | 609 | 832 | 814 | 267 |
| Fibres mélalliques | 77 | 79 | 87 | 79 | 230 |
| Superplastifiant réducteur d'eau | 10 | 10 | 12 | 11 | 12,9 |
| Agent anti-mousse | 2 | 6,1 | 7 | 6,4 | 6,4 |
| Eau | 192 | 193 | 187 | 194 | 223 |

| | | | | | |
|---|---|---|---|---|---|
| * Sable de granulométrie moyenne comprise entre 0,001 et 1 mm. ^{†} Sable de granulométrie moyenne comprise entre 1 et 3 mm. ^{‡} Sable de granulométrie moyenne comprise entre 3 et 6 mm. | | | | | |

**TABLEAU 2**

| **PROPRIETES** | **BETON A** | **BETON B** | **BETON C** | **BETON D** | **BETON E** |
|---|---|---|---|---|---|
| Etalement (en cm) | >65 | >65 | >65 | >65 | >60 |
| Résistance à la compression (en MPa) | | | | | |
| - à 7 jours | 111 | 167 | 155 | 162 | 143 |
| - à 14 jours | 158 | 169 | 179 | 176 | 163 |
| - à 28 jours | 173 | 192 | 188 | 200 | 177 |
| Module d'élasticité à 28 jours (en MPa) | **65496** | **73804** | **65000** | **69084** | **60000** |

**TABLEAU 3**

| **MATIERES PREMIERES** | **BETON 0%** | **BETON 1%** | **BETON 1,5%** | **BETON 2%** | **BETON 3%** |
|---|---|---|---|---|---|
| Ciment | 936 | 936 | 936 | 936 | 1074 |
| Fumées de silice | 142 | 142 | 142 | 142 | 163 |
| Sable 0/1 | 597 | 597 | 697 | 790 | 765 |
| Sable 3/6 | 850 | 814 | 697 | 586 | 267 |
| Fibres | 0 | 79 | 117 | 156 | 230 |
| Superfluidifiant réducteur | 11,2 | 11,2 | 11,2 | 11,2 | 12,9 |
| Agent anti-mousse | 6,4 | 6,4 | 6,4 | 6,4 | 6,3 |
| Eau | 194 | 194 | 194 | 194 | 223 |

| **PROPRIETES** | | | | | |
|---|---|---|---|---|---|
| Etalement en cm | >65 | >65 | >65 | >65 | >60 |
| Résistance à la compression à 7 jours, en MPa | >150 | - | - | 155 | 143 |
| Résistance à la compression à 14 jours, en MPa | >170 | | | 181 | 163 |
| Résistance à la compression à 28 jours, en MPa | >180 | >150 | >150 | 191,4 | 177,4 |
| Module d'élasticité à 28 jours, en GPa | >60 | >60 | >60 | >60 | >60 |

## Revendications

1. Béton très haute performance, autonivelant, présentant une résistance caractéristique à la compression à 28 jours d'au moins 150MPa, un module d'élasticité à 28 jours d'au moins 60GPa, et une résistance à la compression à 40 heures d'au moins 100MPa, ces valeurs étant données pour un béton conservé et maintenu à 20°C, et constitué :
- d'un ciment d'une granulométrie correspondant à une moyenne harmonique des diamètres comprise entre 3 et 7 µm;
- d'un mélange de sables de bauxites calcinées de différentes granulométries, constitué par :
■ un sable de granulométrie moyenne inférieure à 1 mm comprenant 20% de granulats de dimension inférieure à 80 microns,
■ un sable de granulométrie comprise entre 3 et 7 mm,
■ et éventuellement un sable de granulométrie comprise entre 1 et 3 mm, le sable de plus petite granulométrie pouvant être remplacé partiellement par :
■ du ciment, des additions minérales telles que du laitier broyé, des cendres volantes ou du filler de bauxite calcinée dont la moyenne harmonique des diamètres est inférieure à 80 µm, pour ce qui est de la fraction de 20% des granulats de dimension inférieure à 80 µm,
■ et du sable de granulométrie supérieure à 1mm, pour ce qui est de l'autre fraction ;
- de fumée de silice dont 40% des particules ont une dimension inférieure à 1 µm, la moyenne harmonique des diamètres étant voisine de 0,2 µm;
- d'un agent anti-mousse;
- d'un superplastifiant réducteur d'eau choisi parmi les polyacrylates et les éthers polycarboxyliques;
- éventuellement de fibres;
- et d'eau,
ledit béton étant **caractérisé par le fait qu'**il comprend, en parties en poids:
- 100 de ciment;
- de 50 à 200, de préférence de 60 à 180, et plus préférentiellement encore de 80 à 160 de mélange de sables de bauxites calcinées;
- de 6 à 25, de préférence de 6 à 20, de fumée de silice;
- de 0,1 à 10, de préférence de 0,2 à 5 d'agent anti-mousse;
- de 0,1 à 10, de préférence de 0,5 à 5 de superplastifiant réducteur d'eau;
- de 0 à 50, de préférence de 2 à 20, et plus préférentiellement encore de 4 à 16 de fibres;
- et de 10 à 30, de préférence de 10 à 20 d'eau.

2. Béton selon la revendication 1, **caractérisé par le fait que** le ciment est choisi parmi les ciments présentant une teneur en silicates bi- et tricalciques supérieure à 75%.

3. Béton selon la revendication 2, **caractérisé par le fait que** le ciment est choisi parmi les ciments de type Portland CEM I, ayant de préférence des caractéristiques complémentaires telles que "Prise Mer - PM" ou encore mieux "Prise Mer et Résistant aux Sulfates - PM-ES" ou leurs mélanges.

4. Béton selon l'une quelconque des revendications 1 à 3, **caractérisé par le fait que** le superplastifiant réducteur d'eau est un produit à base d'éther polycarboxylique modifié.

5. Béton selon l'une quelconque des revendications 1 à 4, **caractérisé par le fait que** les fibres sont choisies notamment parmi les fibres métalliques, de carbone, de Kevlar®, de polypropylène ou leurs mélanges.

6. Béton selon la revendication 5, **caractérisé par le fait que** les fibres sont des fibres métalliques, de préférence en acier, de longueur comprise entre 5 et 30 mm, de préférence entre 10 et 25 mm, et plus préférentiellement encore entre 10 et 20 mm, et de diamètre compris entre 0,1 et 1,0 mm, de préférence entre 0,2 et 0,5 mm et plus préférentiellement encore entre 0,2 et 0,3 mm.

7. Béton selon l'une quelconque des revendications 1 à 6, **caractérisé par le fait qu'**il comprend en outre de 0,5 à 3, de préférence de 0,5 à 2 et plus préférentiellement encore 1 partie d'oxyde de calcium ou de sulfate de calcium, sous forme micronisée ou pulvérulente.

8. Procédé de préparation d'un béton de fibres selon l'une quelconque des revendications 1 à 7, **caractérisé par le fait que** l'on malaxe tous les constituants du béton jusqu'à l'obtention d'un béton de fluidité souhaitée ou que l'on mélange tout d'abord les constituants granulaires secs, tels que le ciment, les sables, la fumée de silice, et éventuellement le superplastifiant et l'agent anti-mousse, puis que l'on ajoute à ce mélange l'eau, et éventuellement le superplastifiant et l'agent anti-mousse si ceux-ci sont sous forme liquide, ainsi que les fibres et que l'on malaxe jusqu'à l'obtention d'un béton ayant la fluidité souhaitée.

9. Utilisation d'un béton tel que défini selon l'une quelconque des revendications 1 à 7 ou tel que préparé selon le procédé de la revendication 8 pour la réalisation d'éléments préfabriqués tels que des poteaux, poutrelles, poutres, planchers, dallages, d'ouvrages d'art, de pièces précontraintes ou de matériaux composites, de clavages entre éléments de structure, d'éléments de circuit d'assainissement.

## Patentansprüche

1. Selbstnivellierender, besonders leistungsstarker Beton mit einem charakteristischen Druckwiderstand von wenigstens 150 MPa über 28 Tage, einem Elastizitätsmodul von wenigstens 60 GPa über 28 Tage und einem Druckwiderstand von wenigstens 100 MPa über 40 Stunden, wobei sich die genannten Werte auf einen Beton beziehen, der bei 20°C gelagert und gehalten wird, und wobei dieser Beton enthält:
- einen Zement mit einer Korngrößenverteilung, die einem harmonischen Durschnitt der Durchmesser von 3 bis 7 µm entspricht;
- eine Mischung aus kalzinierten Bauxitsanden mit unterschiedlichen Korngrößenverteilungen, die zusammengesetzt ist aus:
- einem Sand mit einer durchschnittlichen Korngrößenverteilung von weniger als 1 mm, der 20 % Körner mit einer Abmessung von weniger als 80 µm enthält,
- einem Sand mit einer Korngrößenverteilung von 3 bis 7 mm,
- und gegebenenfalls einem Sand mit einer Korngrößenverteilung von 1 bis 3 mm,
wobei der Sand mit der kleinsten Korngrößenverteilung teilweise ersetzt werden kann durch:
- Zement, mineralische Zusätze wie zerkleinerte Schlacke, Flugasche oder kalziniertes Bauxitfüllmaterial, wobei der harmonische Durchschnitt der Durchmesser geringer als 80 µm ist, wobei dies der Anteil von 20 % der Körner mit einer kleineren Abmessung als 80 µm ist,
- und Sand mit einer Korngrößenverteilung von über 1 mm, wobei dies der andere Anteil ist;
- Silikastaub, wobei 40 % der Partikel kleiner als 1 µm sind, wobei der harmonische Durchschnitt der Durchmesser nahe bei 0,2 µm liegt;
- ein Antischaummittel;
- ein Fließ- und Wasser-Reduzierungsmittel, das aus Polyacrylaten und Polycarboxylatethern ausgewählt ist;
- gegebenenfalls Fasern;
- und Wasser,
wobei der Beton **dadurch gekennzeichnet ist, dass** er an Gewichtseinheiten umfasst:
- 100 an Zement;
- 50 bis 200, vorzugsweise 60 bis 180 und besonders bevorzugt 80 bis 160 der Mischung aus kalzinierten Bauxitsanden;
- 6 bis 25, vorzugsweise 6 bis 20 an Silikastaub;
- 0,1 bis 10, vorzugsweise 0,2 bis 5 des Antischaummittels;
- 0,1 bis 10, vorzugsweise 0,5 bis 5 des Fließ- und Wasser-Reduzierungsmittels;
- 0 bis 50, vorzugsweise 2 bis 20 und besonders bevorzugt 4 bis 16 an Fasern;
- und 10 bis 30, vorzugsweise 10 bis 20 an Wasser.

2. Beton gemäß Anspruch 1, **dadurch gekennzeichnet, dass** der aus den Zementsorten ausgewählte Zement einen Gehalt an Di- und Tricalciumsilikat von mehr als 75 % aufweist.

3. Beton gemäß Anspruch 2, **dadurch gekennzeichnet, dass** der aus den Zementsorten ausgewählte Zement vom Typ Portland CEM I ist, der vorzugsweise ergänzende Charakteristika aufweist, wie etwa "Abbinden in Meerwasser - PM" oder besser noch "Abbinden in Meerwasser und widerstandsfähig gegen Sulfate - PM-ES" oder Mischungen davon.

4. Beton gemäß einem der Ansprüche 1 bis 3, **dadurch gekennzeichnet, dass** das Fließ- und WasserReduktionsmittel ein Produkt auf der Basis von modifiziertem Polycarboxylatether ist.

5. Beton gemäß einem der Ansprüche 1 bis 4, **dadurch gekennzeichnet, dass** die Fasern insbesondere aus Fasern aus Metall, Kohlenstoff, Kevlar®, Polypropylen oder deren Mischungen ausgewählt sind.

6. Beton gemäß Anspruch 5, **dadurch gekennzeichnet, dass** die Fasern Metallfasern sind, vorzugsweise aus Stahl, mit einer Länge zwischen 5 und 30 mm, vorzugsweise zwischen 10 und 25 mm und besonders bevorzugt zwischen 10 und 20 mm, und mit einem Durchmesser zwischen 0,1 und 1,0 mm, vorzugsweise zwischen 0,2 und 0,5 mm und besonders bevorzugt zwischen 0,2 und 0,3 mm.

7. Beton gemäß einem der Ansprüche 1 bis 6, **dadurch gekennzeichnet, dass** er unter anderem 0,5 bis 3 Einheiten, vorzugsweise 0,5 bis 2 Einheiten und besonders bevorzugt 1 Einheit Calciumoxid oder Calciumsulfat in mikronisierter oder pulverförmiger Form enthält.

8. Verfahren zur Herstellung eines Faserbetons gemäß einem der Ansprüche 1 bis 7, **dadurch gekennzeichnet, dass** alle Bestandteile des Betons gemischt werden, bis ein Beton der gewünschten Fließfähigkeit erhalten wird, oder dass zunächst alle trockenen, kornfähigen Bestandteile, wie der Zement, die Sande, der Silikastaub und gegebenenfalls das Fließmittel und das Antischaummittel gemischt werden, dann zu dieser Mischung das Wasser zugegeben wird und gegebenenfalls das Fließmittel und das Antischaummittel, wenn diese flüssig sind, sowie die Fasern und diese gemischt werden, bis schließlich ein Beton der gewünschten Fließfähigkeit erhalten wird.

9. Verwendung eines Betons gemäß einem der Ansprüche 1 bis 7 oder hergestellt gemäß dem Verfahren von Anspruch 8 zur Herstellung von vorgefertigten Elementen, wie Pfosten, Trägern, Balken, Brettern, Platten, Kunstwerken, vorgespannten Teilen oder Verbundmaterialien, Keilverbindungen zwischen Bauelementen, Bauteilen von Abwassersystemen.

## Claims

1. Very high performance, self-levelling concrete having a typical compression resistance at 28 days of at least 150 MPa, a modulus of elasticity at 28 days of at least 60 GPa and a compression resistance at 40 hours of at least 100 MPa, these values being specified for a concrete stored and kept at 20°C and comprising:
- a cement with a particle size corresponding to a harmonic mean of the diameters ranging between 3 and 7 µm;
- a mixture of calcined bauxite sands having different particle sizes, comprising:
# a sand with a mean particle size of less than 1 mm comprising 20% of granulates with a dimension of less than 80 microns,
# a sand with a particle size ranging between 3 and 7 mm,
# and optionally a sand with a particle size of between 1 and 3 mm,
the sand with the finest particle size being possible for partially replaced by:
# cement, mineral additions such as milled slag, fly ash or calcined bauxite filler, in which the harmonic mean of the diameters is less than 80 µm with regard to the 20% fraction of granulates with a dimension of less than 80 µm,
# and sand with a particle size greater than 1 mm with regard to the other fraction;
- silica fume, of which 40% of the particles have a dimension less than 1 µm, the harmonic mean of the diameters being approximately 0.2 µm;
- an anti-foaming agent;
- a water-reducing super-plasticizer selected from polyacrylates and polycarboxylic ethers;
- optionally fibres;
- and water,
said concrete being **characterised in that** it comprises, in parts by weight;
- 100 of cement;
- 50 to 200, preferably 60 to 180, and even more preferably 80 to 160, of a mixture of calcined bauxite sands;
- 6 to 25, preferably 6 to 20, of silica fume;
- 0.1 to 10, preferably 0.2 to 5, of anti-foaming agent;
- 0.1 to 10, preferably 0.5 to 5, of water-reducing super-plasticizer;
- 0 to 50, preferably 2 to 20, and even more preferably 4 to 16, of fibres;
- and 10 to 30, preferably 10 to 20, of water.

2. Concrete as claimed in claim 1, **characterised in that** the cement is selected from cements having a dicalcium and tricalcium silicate content greater than 75%.

3. Concrete as claimed in claim 2, **characterised in that** the cement is selected from the Portland CEM I-type cements, preferably having additional characteristics such as "Prise Mer - PM" (underwater) or more advantageously "Prise Mer et Résistant aux Sulphates - PM-ES" (underwater and sulphate-resistant) or mixtures thereof.

4. Concrete as claimed in any one of claims 1 to 3, **characterised in that** the water-reducing super-plasticizer is a modified polycarboxylic ether-based product.

5. Concrete as claimed in any one of claims 1 to 4, **characterised in that** the fibres are selected in particular from metallic fibres, carbon fibres, Kevlar® fibres, polypropylene fibres or mixtures thereof.

6. Concrete as claimed in claim 5, **characterised in that** the fibres are metallic fibres, preferably of steel, having a length of between 5 and 30 mm, preferably between 10 and 25 mm, and even more preferably between 10 and 20 mm, and having a diameter of between 0.1 and 1.0 mm, preferably between 0.2 and 0.5 mm, and even more preferably between 0.2 and 0.3 mm.

7. Concrete as claimed in any one of claims 1 to 6, **characterised in that** it further comprises 0.5 to 3, preferably 0.5 to 2, and even more preferably 1 part of calcium oxide or calcium sulphate, in a micronised or powdered form.

8. Method of preparing a fibre concrete as claimed in any one of claims 1 to 7, **characterised in that** all the ingredients of the concrete are mixed until a concrete having the desired fluidity is obtained, or the dry granular ingredients, such as the cement, sands, silica fume and optionally the super-plasticizer and anti-foaming agent, are mixed first of all, after which water is added to this mixture, and optionally the super-plasticizer and anti-foaming agent if the latter are in liquid form, as well as the fibres, and these are mixed until a concrete having the desired fluidity is obtained.

9. Use of a concrete as defined in any one of claims 1 to 7 or as prepared by the method as claimed in claim 8, for making prefabricated parts such as posts, girders, beams, floors, pavements, engineering structures, prestressed parts or composite materials, keying elements between structural elements, drainage circuit parts.
